# EUROPÄISCHE PATENTSCHRIFT

(11) **EP 3 212 473 B1**
(45) Veröffentlichungstag und Bekanntmachung des Hinweises auf die Patenterteilung: **06.06.2018**
(21) Anmeldenummer: 15781578.8
(22) Anmeldetag: 13.10.2015
(51) Int. Cl.: B60R 25/102, H04M 11/04, H04M 1/663, H04M 3/38, H04M 1/725

(54) **VERFAHREN ZUM BETREIBEN EINES KOMMUNIKATIONSSYSTEMS UND KOMMUNIKATIONSSYSTEM**
METHOD FOR OPERATING A COMMUNICATION SYSTEM, AND COMMUNICATION SYSTEM
PROCÉDÉ DE FONCTIONNEMENT D'UN SYSTÈME DE COMMUNICATION, ET SYSTÈME DE COMMUNICATION

(30) Priorität: 31.10.2014 DE 102014016223
(43) Veröffentlichungstag der Anmeldung: 06.09.2017
(73) Patentinhaber: AUDI AG, 85045 Ingolstadt (DE)
(72) Erfinder: BADOUIN, David, Alexander, 85049 Ingolstadt (DE)
(86) Internationale Anmeldenummer: PCT/EP2015/002002
(87) Internationale Veröffentlichungsnummer: WO 2016/066245

(56) Entgegenhaltungen:
- EP-A1- 1 054 563
- WO-A1-2012/174676
- WO-A2-2005/104502
- WO-A2-2008/019339
- US-A1- 2004 096 046

## Beschreibung

Die Erfindung betrifft ein Verfahren zum Betreiben eines Kommunikationssystems und ein Kommunikationssystem.

Die DE 10 2012 022 701 A1 zeigt ein Kommunikationssystem mit einem Mobilfunktelefonmodul für ein Fahrzeug, das eine Speichereinrichtung zum Speichern einer für einen Zugriff auf ein Telekommunikationsnetz erforderlichen Teilnehmeridentität aufweist. Das Mobilfunktelefonmodul ist dazu ausgelegt, während eines Betriebs mit einer in der Speichereinrichtung gespeicherten Teilnehmeridentität über eine Kommunikationseinrichtung derart drahtlos mit einem Mobilfunktelefon zu kommunizieren, dass in dem Mobiltelefon gespeicherte Daten zu dem Mobilfunktelefonmodul übertragbar sind.

Die DE 10 2009 012 628 A1 zeigt eine Anordnung zum Senden eines Notrufs aus einem Fahrzeug. Sobald ein Unfall mit dem Fahrzeug erfolgt, wird ein Notruf an eine Notrufzentrale ausgesendet.

Die DE 10 2009 058 097 A1 beschreibt ein Verfahren zum Aufbau einer Kommunikationsverbindung zur Nutzung eines Telematikdienstes in einem Fahrzeug. Dabei wird eine Sprachverbindung zwischen dem Fahrzeug und einer den Telematikdienst bereitstellenden Dienststelle basierend auf einem Protokoll zum Rufaufbau einer paketvermittelnden Sprachübertragung aufgebaut.

Die WO 2008/019339 A2 beschreibt ein Fahrzeugsicherheitssystem mit einer Mobilfunktionalität. Ein registrierter Eigentümer des Fahrzeugs kann dadurch unter anderem eine Sprachverbindung mit dem Fahrzeugsicherheitssystem herstellen.

In der WO 2005/104502 A2 geht es ganz allgemein darum, wie zu verfahren ist, falls ein Benutzer eines Mobiltelefons einen eingehenden Anruf nicht annimmt. Ein angerufenes Mobiltelefon soll unter bestimmten Umständen einen eingehenden Anruf selbstständig beantworten können.

Schließlich zeigt die WO 2012/174676 A1 eine Art Überwachungssystem, welches mittels eines Telefons fernbedient werden kann.

Es ist die Aufgabe der vorliegenden Erfindung, eine Möglichkeit bereitzustellen, mittels welcher ein Fahrzeugbesitzer auf besonders einfache und zuverlässige Weise einen Fahrer seines eigenen Kraftwagens erreichen kann.

Diese Aufgabe wird durch ein Verfahren zum Betreiben eines Kommunikationssystems sowie durch ein Kommunikationssystem mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Kommunikationssystems wird eine Chipkarte, insbesondere eine SIM-Karte, in einer Kommunikationseinrichtung eines Kraftwagens bereitgestellt, welche eine Benutzerkennung zum Einwählen in zumindest ein Mobilfunknetz umfasst. Des Weiteren wird eine Gerätekennung eines Mobiltelefons in der Kommunikationseinrichtung des Kraftwagens gespeichert. Ferner wird eine Mobilfunkverbindung zwischen dem Mobiltelefon und der Kommunikationseinrichtung des Kraftwagens unter Verwendung der auf der Chipkarte hinterlegten Benutzerkennung hergestellt, falls eine vorbestimmte Aktivierungshandlung am Mobiltelefon erfasst und ermittelt worden ist, dass die Gerätekennung des Mobiltelefons in der Kommunikationseinrichtung des Kraftwagens abgespeichert ist. Bei dem Mobiltelefon handelt es sich vorzugsweise um ein Smartphone, welches eindeutig dem Besitzer oder Hauptnutzer des Kraftwagens zugewiesen ist. Diese eindeutige Zuweisung zu dem Besitzer beziehungsweise Hauptnutzer des Kraftwagens erfolgt erfindungsgemäß durch das Abspeichern der Gerätekennung des betreffenden Mobiltelefons, also vorzugsweise des Smartphones, in der Kommunikationseinrichtung des Kraftwagens. Bei der Gerätekennung handelt es sich vorzugsweise um die sogenannte International Mobile Station Equipment Identity, kurz mit IMEI bezeichnet. Dabei handelt es sich um eine eindeutige fünfzehnstellige Seriennummer, anhand derer jedes GSM- oder UMTS-Endgerät theoretisch eindeutig identifiziert werden kann.

Mit anderen Worten ist es erfindungsgemäß vorgesehen, dass eine exklusive Mobilfunkverbindung zwischen dem Mobiltelefon und der Kommunikationseinrichtung des Kraftwagens hergestellt wird, wenn ermittelt worden ist, dass die Gerätekennung des betreffenden Mobiltelefons in der Kommunikationseinrichtung des Kraftwagens abgespeichert ist. Dadurch hat der Besitzer beziehungsweise Hauptnutzer des Kraftwagens immer die Möglichkeit, Kontakt mit demjenigen aufnehmen, der befugt oder auch unbefugt gerade seinen Kraftwagen benutzt. Zudem ist es erfindungsgemäß vorgesehen, dass automatisch eine Sprachverbindung zwischen dem Mobiltelefon und der Kommunikationseinrichtung hergestellt wird, sobald die Mobilfunkverbindung für eine vorgegebene Dauer hergestellt worden ist. Beispielsweise wird nach einem dreimaligen Klingeln automatisch das Mobiltelefon zu dem Kraftwagen durchgestellt, also die Sprachverbindung aufgebaut, so dass der Benutzer des Mobiltelefons direkt mit dem betreffenden Fahrer des Kraftwagens kommunizieren kann. Mit anderen Worten hat der Fahrer gar keine Wahl, ob er die Sprachverbindung, also die Durchstellung des Telefonanrufs mittels des Mobiltelefons, zulassen möchte oder nicht. Dies kann insbesondere dann vorteilhaft sein, wenn der Kraftwagen gestohlen worden ist und der Besitzer des Kraftwagens in Kontakt mit dem Fahrer treten möchte, welcher den Kraftwagen entwendet hat.

Zudem ist es erfindungsgemäß vorgesehen, dass die hergestellte Sprachverbindung nur dann beendet wird, falls eine entsprechende Beendigungshandlung am Mobiltelefon erfasst worden ist. Mit anderen Worten kann ein Fahrer des Kraftwagens die Sprachverbindung, also das Telefonat, zwischen dem Mobiltelefon und dem Kraftwagen gar nicht selbst beenden. Dies ist insbesondere dann wiederum von Vorteil, wenn es sich beispielsweise um einen Diebstahl des Kraftwagens handelt. Zudem ist es erfindungsgemäß vorgesehen, dass, falls eine Mobilfunkverbindung zwischen dem Mobiltelefon und der Kommunikationseinrichtung nicht herstellbar ist, ein Audiorekorder aktiviert und eine mittels diesem aufgezeichnete Nachricht an die Kommunikationseinrichtung übermittelt wird, sobald eine Mobilfunkverbindung zwischen dem Audiorekorder und der Kommunikationseinrichtung herstellbar ist. Dies kann beispielsweise der Fall sein, wenn die Zündung des Kraftwagens deaktiviert, also beispielsweise ein Zustand Klemme aus, vorliegt. Durch die Aufzeichnung der Nachricht und der dadurch gegebenen Abspielmöglichkeit der Nachricht, sobald der Kraftwagen wieder aktiviert ist, stünde dem Benutzer des Mobiltelefons eine zusätzliche Memo-Funktion zur Verfügung, um einen Fahrer des Kraftwagens zu erreichen.

In vorteilhafter Ausgestaltung der Erfindung ist es vorgesehen, dass auf dem Mobiltelefon eine Applikation installiert ist, mittels welcher die Herstellung der Mobilfunkverbindung zwischen dem Mobiltelefon und der Kommunikationseinrichtung ausgelöst wird, sobald eine vorgegebene Benutzereingabe über die Applikation erfasst worden ist. Mit anderen Worten kann ein exklusiver Sprachanruf über eine sogenannte App initiiert werden, welche auf dem betreffenden Mobiltelefon installiert ist. Beispielsweise wird mittels der App ein Bedienelement mittels eines berührungsempfindlichen Bildschirms des Mobiltelefons angezeigt, wobei die Herstellung der Mobilfunkverbindung zwischen dem Mobiltelefon und der Kommunikationseinrichtung ausgelöst wird, sobald dieses Bedienelement betätigt worden ist. Dadurch kann ein Besitzer oder Hauptnutzer des Kraftwagens auf besonders einfache Weise die besagte exklusive Mobilfunkverbindung zwischen seinem eigenen Mobiltelefon und dem Kraftwagen herstellen.

In weiterer vorteilhafter Ausgestaltung der Erfindung ist es vorgesehen, dass ein jeweiliges akustisches Signal mittels des Mobiltelefons und der Kommunikationseinrichtung ausgegeben wird, sobald die Mobilfunkverbindung herstellt worden ist. Beispielsweise wird mittels des Mobiltelefons ein Klingelton ausgegeben, welcher anzeigt, dass mittels des Mobiltelefons gerade der Kraftwagen angerufen wird. Mittels der Kommunikationseinrichtung wird beispielsweise ein Klingelton ausgegeben, welcher dem Fahrer des Kraftwagens signalisiert, dass gerade versucht wird, einen Sprachanruf durchzustellen.

In weiterer vorteilhafter Ausgestaltung der Erfindung ist es vorgesehen, dass die Mobilfunkverbindung zwischen dem Mobiltelefon und der Kommunikationseinrichtung über einen Server hergestellt wird. Beispielsweise kann auch über den Server der Abgleich erfolgen, ob die Gerätekennung des Mobiltelefons überhaupt in der Kommunikationseinrichtung des Kraftwagens hinterlegt und somit der Benutzer des Mobiltelefons überhaupt autorisiert ist, den besagten exklusiven Sprachanruf durchzuführen. Zudem kann beispielsweise auch die Hinterlegung der Gerätekennung des Mobiltelefons in der Kommunikationseinrichtung des Kraftwagens über den Server, also mittels des Servers, erfolgen.

Das erfindungsgemäße Kommunikationssystem umfasst einen Kraftwagen, ein Mobiltelefon, eine in dem Kraftwagen integrierte Kommunikationseinrichtung, welche dazu ausgebildet ist, eine Gerätekennung des Mobiltelefons abzuspeichern. Des Weiteren umfasst das Kommunikationssystem eine in der Kommunikationseinrichtung aufgenommene Chipkarte, insbesondere eine SIM-Karte, mit einer Benutzerkennung für ein Mobilfunknetz. Das Kommunikationssystem ist dazu ausgebildet, nur dann eine Mobilfunkverbindung zwischen dem Mobiltelefon und der Kommunikationseinrichtung des Kraftwagens unter Verwendung der auf der Chipkarte hinterlegten Benutzerkennung herzustellen, falls eine vorbestimmte Aktivierungshandlung am Mobiltelefon erfasst und ermittelt worden ist, dass die Gerätekennung des Mobiltelefons in der Kommunikationseinrichtung abgespeichert ist. Das Kommunikationssystem ist zudem dazu ausgebildet, automatisch eine Sprachverbindung zwischen dem Mobiltelefon und der Kommunikationseinrichtung herzustellen, sobald die Mobilfunkverbindung für eine vorgegebene Dauer hergestellt worden ist, und die hergestellte Sprachverbindung nur dann zu beenden, falls eine entsprechende Beendigungshandlung am Mobiltelefon erfasst worden ist, so dass ein Fahrer des Kraftwagens die Sprachverbindung nicht selbst beenden kann. Das Kommunikationssystem ist zudem dazu ausgebildet, falls die Mobilfunkverbindung zwischen dem Mobiltelefon und der Kommunikationseinrichtung nicht herstellbar ist, einen Audiorekorder zu aktivieren und eine mittels diesem aufgezeichnete Nachricht an die Kommunikationseinrichtung zu übermitteln und mittels des Kraftwagens ausgeben zu lassen, sobald die Mobilfunkverbindung zwischen dem Audiorekorder und der Kommunikationseinrichtung herstellbar ist. Vorteilhafte Ausgestaltungen des erfindungsgemäßen Verfahrens sind dabei als vorteilhafte Ausgestaltungen des Kommunikationssystems anzusehen, wobei das Kommunikationssystem insbesondere Mittel zur Durchführung der Verfahrensschritte aufweist.

In vorteilhafter Ausgestaltung des Kommunikationssystems ist es vorgesehen, dass die Kommunikationseinrichtung dazu ausgebildet ist, einen Verkehrsunfall des Kraftwagens automatisch über das Mobilfunknetz an eine Notrufzentrale zu melden. Mit anderen Worten kommt der Kommunikationseinrichtung also eine Doppelfunktionalität zu, nämlich zum einen, den zuvor beschriebenen exklusiven Sprachanruf zu ermöglichen, und zum anderen gleichzeitig eine automatische Notruffunktion bereitzustellen.

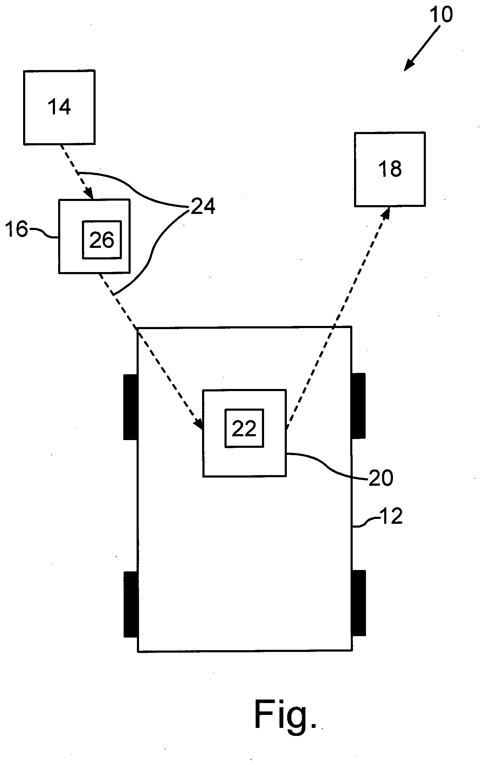

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Kommunikationssystems, welches einen Kraftwagen, ein Mobiltelefon und eine Notrufzentrale umfasst.

Ein insgesamt mit 10 bezeichnetes Kommunikationssystem umfasst einen Kraftwagen 12, ein Mobiltelefon 14, einen Server 16 und eine Notrufzentrale 18. Der Kraftwagen 12 weist eine in diesen integrierte Kommunikationseinrichtung 20 auf, welche dazu ausgebildet ist, eine Gerätekennung des Mobiltelefons 14 abzuspeichern. In der Kommunikationseinrichtung 20 ist eine Chipkarte 22 aufgenommen, bei welcher es sich vorliegend um eine SIM-Karte mit einer entsprechenden Benutzerkennung für ein Mobilfunknetz handelt.

Das Kommunikationssystem 10 ist dazu ausgebildet, nur dann eine Mobilfunkverbindung 24 zwischen dem Mobiltelefon 14 und der Kommunikationseinrichtung 20 unter Verwendung der auf der Chipkarte 22 hinterlegten Benutzerkennung herzustellen, falls eine vorbestimmte Aktivierungshandlung am Mobiltelefon 14 erfasst und ermittelt worden ist, dass die Gerätekennung des Mobiltelefons 14 auch tatsächlich in der Kommunikationseinrichtung 20 abgespeichert ist. Bei der Gerätekennung des Mobiltelefons 14 handelt es sich vorzugsweise um die sognannte International Mobile Station Equipment Identity, kurz mit IMEI bezeichnet.

Die Kommunikationseinrichtung 20 ist darüber hinaus dazu ausgebildet, einen Verkehrsunfall des Kraftwagens 12 automatisch über das Mobilfunknetz an die Notrufzentrale 18 zu melden, was ebenfalls unter Verwendung der auf der Chipkarte 22 hinterlegten Benutzerkennung erfolgt.

Nachfolgend wird ein Verfahren zum Betreiben des Kommunikationssystems 10 näher erläutert. Zunächst wird die Chipkarte 22 in der Kommunikationseinrichtung 20 des Kraftwagens 12 bereitgestellt, wobei die Chipkarte 22 eine Benutzerkennung zum Einwählen in zumindest ein Mobilfunknetz umfasst. Des Weiteren wird die Gerätekennung des Mobiltelefons 14 in der Kommunikationseinrichtung 20 gespeichert. Auf dem Mobiltelefon 14 kann eine Applikation, kurz eine sogenannte App, installiert sein, über welche beispielsweise die IMEI abgefragt, an den Server 16 weitergeleitet und wiederum von dem Server 16 an die Kommunikationseinrichtung 20 weitergeleitet wird, wonach die IMEI dann in der Kommunikationseinrichtung 20 abgespeichert wird. Alternativ oder zusätzlich kann es beispielsweise auch vorgesehen sein, dass der Kraftwagen 12 über eine entsprechende Benutzerschnittstelle mit einer entsprechenden graphischen Benutzeroberfläche verfügt, über welche die IMEI oder eine sonstige eindeutige Gerätekennung des Mobiltelefons 14 eingegeben werden kann, so dass diese innerhalb der Kommunikationseinrichtung 20 abgespeichert wird.

Mittels der besagten App wird die Möglichkeit bereitgestellt, die Mobilfunkverbindung 24 zwischen dem Mobiltelefon 14 und der Kommunikationseinrichtung 20 herzustellen. Beispielsweise wird über die App bewirkt, dass auf einer berührungsempfindlichen Anzeigeeinrichtung des Mobiltelefons 14 eine virtuelle Taste angezeigt wird. Sobald ein Benutzer diese virtuelle Taste drückt, wird die Mobilfunkverbindung 24 zwischen dem Mobiltelefon 14 und der Kommunikationseinrichtung 20 über den Server 16 unter Verwendung der auf der Chipkarte 22 hinterlegten Benutzerkennung hergestellt, falls eine Übereinstimmung zwischen der Gerätekennung des Mobiltelefons 14 und der in der Kommunikationseinrichtung 20 des Kraftwagens 12 abgespeicherten Gerätekennung vorliegt.

Sobald die Mobilfunkverbindung 24 hergestellt worden ist, klingelt es innerhalb des Kraftwagens 12 an, so dass einem Fahrer signalisiert wird, dass gerade versucht wird, ein Telefonat durchzustellen. Gleichzeitig wird mittels des Mobiltelefons 14 ein akustisches Signal ausgegeben, mittels welchem einem Benutzer des Mobiltelefons 14 signalisiert wird, dass die Mobilfunkverbindung 24 als solche schon hergestellt ist und der Kraftwagen 12 gerade angerufen wird.

Gemäß einer ersten Alternative kann es hierbei vorgesehen sein, dass automatisch eine Sprachverbindung zwischen dem Mobiltelefon 14 und der Kommunikationseinrichtung 20 hergestellt wird, sobald die Mobilfunkverbindung 24 für eine vorgegebene Dauer hergestellt worden ist, beispielsweise wenn drei Mal angeklingelt worden ist. Ein Fahrer des Kraftwagens 12 hat somit gar nicht die Möglichkeit, den eingehenden Anruf abzulehnen, stattdessen wird der Anruf automatisch durchgestellt. In diesem Zusammenhang kann es auch noch vorgesehen sein, dass die hergestellte Sprachverbindung, also der durchgestellte Anruf, nur dann beendet wird, falls eine entsprechende Beendigungshandlung am Mobiltelefon 14, beispielsweise wiederum über die besagte App, erfasst worden ist. Der Benutzer des Mobiltelefons 14 kann somit die Durchstellung seines Anrufs auf ganz einfache Weise erzwingen. Dies kann beispielsweise von Vorteil sein, wenn der Kraftwagen 12 gestohlen worden ist und der Benutzer des Mobiltelefons 14 sich zu dem unrechtmäßigen Entwender des Kraftwagens 12 durchstellen lassen möchte. Beispielsweise ist es auch denkbar, dass ein Kind des Benutzers des Mobiltelefons 14 mit dem Kraftwagen 12 unterwegs ist und sich verspätet hat. Auch in diesem Fall kann es vorteilhaft sein, wenn der Benutzer des Mobiltelefons 14 eine Durchstellung des Sprachanrufs erzwingen kann.

Gemäß einer zweiten Alternative kann es auch vorgesehen sein, dass eine Sprachverbindung zwischen dem Mobiltelefon 14 und der Kommunikationseinrichtung 20 nur dann hergestellt wird, wenn fahrzeugseitig eine Annahme der Sprachverbindung bestätigt worden ist. Vorzugsweise ist die auf dem Mobiltelefon 14 installierte App derart ausgebildet, dass der Benutzer des Mobiltelefons 14 auswählen kann, welchen Typus von Sprachanruf er wünscht, also ob er einen erzwungenen Sprachanruf oder einen herkömmlichen Sprachanruf wünscht.

Sollte die Variante gewählt sein, dass die Sprachverbindung zwischen dem Mobiltelefon 14 und der Kommunikationseinrichtung 20 nur dann hergestellt wird, wenn fahrzeugseitig eine Annahme der Sprachverbindung bestätigt worden ist, so ist es vorzugsweise auch vorgesehen, dass die Sprachverbindung sowohl mobiltelefonseitig als auch fahrzeugseitig beendet werden kann.

Es kann auch zu Situationen kommen, in welchen die Mobilfunkverbindung 24 zwischen dem Mobiltelefon 14 und der Kommunikationseinrichtung 20 gar nicht hergestellt werden kann, beispielsweise weil ein Zustand Klemme 15 aus vorliegt oder beispielsweise auch weil der Kraftwagen 12 sich gerade in einem Funkloch befindet. In dem Fall, dass die Mobilfunkverbindung 24 nicht hergestellt werden kann, wird ein Audiorekorder 26, welcher vorliegend in den Server 16 integriert ist, aktiviert und eine mittels diesem aufgezeichnete Nachricht an die Kommunikationseinrichtung 20 übermittelt, sobald die Mobilfunkverbindung 24 zwischen dem Audiorekorder 26 und der Kommunikationseinrichtung 20, also zwischen dem Server 16 und der Kommunikationseinrichtung 20, herstellbar ist. Mit anderen Worten wird die aufgezeichnete Nachricht dann an den Kraftwagen 12 durchgestellt, sobald mittels des Servers 16 die Mobilfunkverbindung 24 aufgebaut werden kann.

Hier kann es beispielsweise auch zwei Alternativen geben. Die erste Alternative wäre derart, dass die aufgezeichnete Nachricht automatisch an die Kommunikationseinrichtung 20 übertragen und mittels des Kraftwagens 12 ausgegeben wird, ohne dass ein Fahrer des Kraftwagens 12 dies unterbinden kann. Gemäß einer zweiten Alternative kann es aber auch vorgesehen sein, dass beispielsweise nur mittels eines optischen oder akustischen Signals einem Fahrer des Kraftwagens 12 verdeutlicht wird, dass eine aufgezeichnete Nachricht eingegangen ist, wobei diese erst dann abgespielt wird, wenn eine fahrzeugseitige, insbesondere fahrerseitige Bestätigung, erfasst worden ist.

## Patentansprüche

1. Verfahren zum Betreiben eines Kommunikationssystems (10), mit den Schritten:
- Bereitstellen einer Chipkarte (22), insbesondere einer SIM-Karte, in einer Kommunikationseinrichtung (20) eines Kraftwagens (12), welche eine Benutzerkennung zum Einwählen in zumindest ein Mobilfunknetz umfasst;
- Speichern einer Gerätekennung eines Mobiltelefons (14) in der Kommunikationseinrichtung (20) des Kraftwagens (20);
- Herstellen einer Mobilfunkverbindung (24) zwischen dem Mobiltelefon (14) und der Kommunikationseinrichtung (20) des Kraftwagens (12) unter Verwendung der auf der Chipkarte (22) hinterlegten Benutzerkennung, falls eine vorbestimmte Aktivierungshandlung am Mobiltelefon (14) erfasst und ermittelt worden ist, dass die Gerätekennung des Mobiltelefons (14) in der Kommunikationseinrichtung (20) des Kraftwagens (12) abgespeichert ist;
**dadurch gekennzeichnet, dass**
automatisch eine Sprachverbindung zwischen dem Mobiltelefon (14) und der Kommunikationseinrichtung (20) hergestellt wird, sobald die Mobilfunkverbindung (24) für eine vorgegebene Dauer hergestellt worden ist, und die hergestellte Sprachverbindung nur dann beendet wird, falls eine entsprechende Beendigungshandlung am Mobiltelefon (14) erfasst worden ist, so dass ein Fahrer des Kraftwagens (12) die Sprachverbindung nicht selbst beenden kann, wobei falls die Mobilfunkverbindung (24) zwischen dem Mobiltelefon (14) und der Kommunikationseinrichtung (20) nicht herstellbar ist, ein Audiorekorder (26) aktiviert und eine mittels diesem aufgezeichnete Nachricht an die Kommunikationseinrichtung (20) übermittelt und mittels des Kraftwagens (12) ausgegeben wird, sobald die Mobilfunkverbindung (24) zwischen dem Audiorekorder (26) und der Kommunikationseinrichtung (20) herstellbar ist.

2. Verfahren nach Anspruch 1, wobei auf dem Mobiltelefon (14) eine Applikation installiert ist, mittels welcher die Herstellung der Mobilfunkverbindung (24) zwischen dem Mobiltelefon (14) und der Kommunikationseinrichtung (20) ausgelöst wird, sobald eine vorgegebene Benutzereingabe über die Applikation erfasst worden ist.

3. Verfahren nach Anspruch 1 oder 2, wobei ein jeweiliges akustisches Signal mittels des Mobiltelefons (14) und der Kommunikationseinrichtung (20) ausgegeben wird, sobald die Mobilfunkverbindung (24) hergestellt worden ist.

4. Verfahren nach einem der vorhergehenden Ansprüche, wobei die Mobilfunkverbindung (24) zwischen dem Mobiltelefon (14) und der Kommunikationseinrichtung (20) über einen Server (16) hergestellt wird.

5. Kommunikationssystem (10), mit
- einem Kraftwagen (12);
- einem Mobiltelefon (14);
- einer in dem Kraftwagen (12) integrierten Kommunikationseinrichtung (20), welche dazu ausgebildet ist, eine Gerätekennung des Mobiltelefons (14) abzuspeichern;
- einer in der Kommunikationseinrichtung (20) aufgenommenen Chipkarte (22), insbesondere einer SIM-Karte, mit einer Benutzerkennung für ein Mobilfunknetz;
- wobei das Kommunikationssystem (10) dazu ausgebildet ist, nur dann eine Mobilfunkverbindung (24) zwischen dem Mobiltelefon (14) und der Kommunikationseinrichtung (20) des Kraftwagens (12) unter Verwendung der auf der Chipkarte (22) hinterlegten Benutzerkennung herzustellen, falls eine vorbestimmte Aktivierungshandlung am Mobiltelefon (14) erfasst und ermittelt worden ist, dass die Gerätekennung des Mobiltelefons (14) in der Kommunikationseinrichtung (20) abgespeichert ist;
**dadurch gekennzeichnet, dass**
das Kommunikationssystem (10) dazu ausgebildet ist, automatisch eine Sprachverbindung zwischen dem Mobiltelefon (14) und der Kommunikationseinrichtung (20) herzustellen, sobald die Mobilfunkverbindung (24) für eine vorgegebene Dauer hergestellt worden ist, und die hergestellte Sprachverbindung nur dann zu beenden, falls eine entsprechende Beendigungshandlung am Mobiltelefon (14) erfasst worden ist, so dass ein Fahrer des Kraftwagens (12) die Sprachverbindung nicht selbst beenden kann, wobei das Kommunikationssystem (10) dazu ausgebildet ist, falls die Mobilfunkverbindung (24) zwischen dem Mobiltelefon (14) und der Kommunikationseinrichtung (20) nicht herstellbar ist, einen Audiorekorder (26) zu aktivieren und eine mittels diesem aufgezeichnete Nachricht an die Kommunikationseinrichtung (20) zu übermitteln und mittels des Kraftwagens (12) ausgeben zu lassen, sobald die Mobilfunkverbindung (24) zwischen dem Audiorekorder (26) und der Kommunikationseinrichtung (20) herstellbar ist.

6. Kommunikationssystem (10) nach Anspruch 5, wobei die Kommunikationseinrichtung (20) dazu ausgebildet ist, einen Verkehrsunfall des Kraftwagens (12) automatisch über das Mobilfunknetz an eine Notrufzentrale (18) zu melden.

## Claims

1. Method for operating a communication system (10), comprising the steps of:
- providing a chip card (22), in particular a SIM card, in a communication device (20) of a motor vehicle (12), said chip card comprising a user identification for dialling into at least one mobile network;
- storing a device identification of a mobile phone (14) in the communication device (20) of the motor vehicle (20);
- establishing a mobile connection (24) between the mobile phone (14) and the communication device (20) of the motor vehicle (12) using the user identification stored on the chip card (22), if a predetermined activation action has been detected on the mobile phone (14) and it has been determined that the device identification of the mobile phone (14) is stored in the communication device (20) of the motor vehicle (12);
**characterised in that**
a voice connection is automatically established between the mobile phone (14) and the communication device (20) as soon as the mobile connection (24) has been established for a specified duration, and the established voice connection is only terminated if a corresponding termination action has been detected on the mobile phone (14), so that a driver of the motor vehicle (12) cannot terminate the voice connection, wherein, if the mobile connection (24) between the mobile phone (14) and the communication device (20) cannot be established, an audio recorder (26) is activated to record a message, the recorded message is transmitted to the communication device (20) and output by the motor vehicle (12) as soon as the mobile connection (24) between the audio recorder (26) and the communication device (20) can be established.

2. Method according to claim 1,
wherein
an application is installed on the mobile phone (14) by means of which the establishment of the mobile connection (24) between the mobile phone (14) and the communication device (20) is triggered as soon as a specified user input has been detected via the application.

3. Method according to claim 1 or 2,
wherein
an acoustic signal is output by the mobile phone (14) and the communication device (20) as soon as the mobile connection (24) has been established.

4. Method according to any of the preceding claims,
wherein
the mobile connection (24) between the mobile phone (14) and the communication device (20) is established via a server (16).

5. Communication system (10) comprising
- a motor vehicle (12);
- a mobile phone (14);
- a communication device (20) integrated into the motor vehicle (12) and designed to store a device identification of the mobile phone (14);
- a chip card (22) housed in the communication device (20), in particular a SIM card, comprising a user identification for a mobile network;
- wherein the communication system (10) is designed to establish a mobile connection (24) between the mobile phone (14) and the communication device (20) of the motor vehicle (12) using the user identification stored on the chip card (22) only if a predetermined activation action has been detected on the mobile phone (14) and it has been determined that the device identification of the mobile phone (14) is stored in the communication device (20);
**characterised in that**
the communication system (10) is designed to automatically establish a voice connection between the mobile phone (14) and the communication device (20) as soon as the mobile connection (24) has been established for a specified duration, and only to terminate the established voice connection if a corresponding termination action has been detected on the mobile phone (14), so that a driver of the motor vehicle (12) cannot terminate the voice connection, wherein the communication system (10) is designed, if the mobile connection (24) between the mobile phone (14) and the communication device (20) cannot be established, to activate an audio recorder (26) to record a message, transmit the recorded message to the communication device (20), and have the recorded message output by the motor vehicle (12) as soon as the mobile connection (24) between the audio recorder (26) and the communication device (20) can be established.

6. Communication system (10) according to claim 5,
wherein
the communication device (20) is designed to automatically report a traffic accident of the motor vehicle (12) to an emergency call centre (18) via the mobile network.

## Revendications

1. Procédé de fonctionnement d'un système de communication (10), comprenant les étapes consistant à :
- la mise en oeuvre d'une carte à puce (22), en particulier une carte SIM, dans un dispositif de communication (20) d'un véhicule automobile (12), qui comprend un identifiant d'utilisateur pour accéder à au moins un réseau de téléphonie mobile ;
- la mémorisation d'un identifiant d'appareil d'un téléphone mobile (14) dans le dispositif de communication (20) du véhicule automobile (20) ;
- l'établissement d'une liaison téléphonique mobile (24) entre le téléphone mobile (14) et le dispositif de communication (20) du véhicule automobile (12) en utilisant l'identifiant d'utilisateur mémorisé sur la carte à puce (22) au cas où une action d'activation prédéterminée a été détectée et déterminée sur le téléphone mobile (14) de sorte que l'identifiant d'appareil du téléphone mobile (14) soit mémorisé dans le dispositif de communication (20) du véhicule automobile (12) ;
**caractérisé en ce que** :
une liaison vocale est établie automatiquement entre le téléphone mobile (14) et le dispositif de communication (20) aussitôt que la liaison téléphonique mobile (24) a été établie pour une période prédéfinie et la liaison vocale établie ne se termine qu'au cas où une action de clôture correspondante a été détectée sur le téléphone mobile (14) de sorte qu'un conducteur du véhicule automobile (12) ne puisse terminer lui-même la liaison vocale, dans lequel, au cas où la liaison téléphonique mobile (24) ne peut être établie entre le téléphone mobile (14) et le dispositif de communication (20), un enregistreur audio (26) est activé et un message enregistré au moyen de celui-ci est transmis au dispositif de communication (20) et délivré au moyen du véhicule automobile (12) aussitôt que la liaison téléphonique mobile (24) a été établie entre l'enregistreur audio (26) et le dispositif de communication (20).

2. Procédé selon la revendication 1,
dans lequel est installée sur le téléphone mobile (14) une application au moyen de laquelle l'établissement de la liaison téléphonique mobile (24) est déclenché entre le téléphone mobile (14) et le dispositif de communication (20) aussitôt qu'une entrée utilisateur prédéfinie a été détectée via l'application.

3. Procédé selon la revendication 1 ou 2,
dans lequel un signal acoustique respectif est délivré au moyen du téléphone mobile (14) et du dispositif de communication (20) aussitôt que la liaison téléphonique mobile (24) a été établie.

4. Procédé selon l'une quelconque des revendications précédentes,
dans lequel la liaison téléphonique mobile (24) est établie entre le téléphone mobile (14) et le dispositif de communication (20) via un serveur (16).

5. Système de communication (10) avec :
- un véhicule automobile (12) ;
- un téléphone mobile (14) ;
- un dispositif de communication (20) intégré au véhicule automobile (12), qui est conçu de manière à enregistrer un identifiant d'appareil du téléphone mobile (14) ;
- une carte à puce (22) reçue dans le dispositif de communication (20), en particulier une carte SIM, avec un identifiant d'utilisateur pour un réseau de téléphonie mobile ;
- dans lequel le système de communication (10) est conçu pour n'établir une liaison téléphonique mobile (24) entre le téléphone mobile (14) et le dispositif de communication (20) du véhicule automobile (12) en utilisant l'identifiant d'utilisateur enregistré sur la carte à puce (22) qu'au cas où une action d'activation prédéterminée a été détectée sur le téléphone mobile (14) et qu'il a été déterminé que l'identifiant d'appareil du téléphone mobile (14) a été enregistré dans le dispositif de communication (20) ;
**caractérisé en ce que** :
le système de communication (10) est conçu en sorte d'établir automatiquement une liaison vocale entre le téléphone mobile (14) et le dispositif de communication (20) aussitôt que la liaison téléphonique mobile (24) a été établie pour une période prédéfinie et de n'achever la liaison vocale établie qu'au cas où une action de clôture correspondante a été détectée sur le téléphone mobile (14) de sorte qu'un conducteur du véhicule automobile (12) ne puisse terminer la liaison vocale lui-même, dans lequel le système de communication (10) est conçu, au cas où la liaison téléphonique mobile (24) ne peut être établie entre le téléphone mobile (14) et le dispositif de communication (20), pour activer un enregistreur audio (26) et transmettre un message enregistré au moyen de celui-ci au dispositif de communication (20) et le faire délivrer au moyen du véhicule automobile (12) aussitôt que la liaison téléphonique mobile (24) peut être établie entre l'enregistreur audio (26) et le dispositif de communication (20).

6. Système de communication (10) selon la revendication 5,
dans lequel le dispositif de communication (20) est conçu de manière à signaler automatiquement un accident de la circulation du véhicule automobile (12) à une centrale de secours (18) via le réseau de téléphonie mobile.
